# EUROPÄISCHE PATENTANMELDUNG

(11) **EP 0 656 703 A1**
(43) Veröffentlichungstag der Anmeldung: **07.06.1995**
(21) Anmeldenummer: 94118977.1
(22) Anmeldetag: 02.12.1994
(51) Int. Cl.: H04J 1/05

(54) **Verfahren zur Erzeugung eines FDM-Signals**

(30) Priorität: 04.12.1993 DE 4341423
(71) Anmelder: ANT Nachrichtentechnik GmbH, D-71522 Backnang (DE)
(72) Erfinder: Göckler, Heinz, Dr., D-71522 Backnang (DE); Grotz, Karlheinz, D-70734 Fellbach (DE); Süssmeier, Georg, D-71522 Backnang (DE)

(57) **Zusammenfassung**

Verfahren zur Erzeugung eines FDM-Signals hoher Kanalzahl für Übertragungszwecke in Rundfunk- und Fernseh-Verteilsystemen, wobei die mit einer einheitlichen Abtastrate abgetasteten und digitalisierten Kanal-Signale jeweils in interpolierenden digitalen Frequenzumsetzern unter Erhöhung der Abtastrate frequenzumgesetzt und zu dem FDM-Signal zusammengefaßt werden, wobei die frequenzumgesetzten Signale komplexwertige Signale sind, welche mittels eines komplexen Addierers zusammengefaßt und in einer zweiten Stufe mittels Filter mit komplexwertigen Koeffizienten unter weiterer Erhöhung der Abtastrate frequenzumgesetzt und in reelle Signale umgewandelt werden, welche mittels eines reellen Addierers zu dem FDM-Signal zusammengefaßt werden, dadurch gekennzeichnet, daß zur Separierung der einzelnen Kanal- bzw. Kanalbündelsignale aus dem FDM-Signal die zur Aufbereitung desselben angewendeten Verfahrensschritte einer Hermite'schen Transposition unterzogen und angewendet werden.

Einsatz in einem Rundfunk- und Fernsehverteilsystem, insbesondere bei Glasfaser, welches eine hohe Kanalzahl und einen lokalen Austausch von Programmen bei hoher Flexibilität und Rekonfigurierbarkeit an beliebigen Stellen mittels aufwandsarmer Einzelkanalbandfilter erlaubt.

## Beschreibung

Die Erfindung bezieht sich auf ein Verfahren zur Erzeugung eines FDM-Signals gemäß Oberbegriff des Anspruches 1.

Solche Verfahren sind bekannt beispielsweise durch die deutschen Offenlegungsschriften 40 26 476, 40 26 477, 40 41 632 und 40 41 634.

Die bekannten Verfahren sind ausgerichtet bzw. ausgelegt auf eine relativ niedrige Abtastfrequenz von beispielsweise 28 MHz, die mit vorhandener Technologie mühelos beherrschbar ist. Es kann jedoch mit diesen Verfahren nur eine begrenzte Anzahl von Kanälen betrieben werden.

Der Hauptanmeldung lag die Aufgabe zugrunde, ein Verfahren der eingangs genannten Art anzugeben, welches in der Lage ist, bei zumutbarem Mehraufwand eine sehr hohe Kanalanzahl bei extrem hoher Abtastfrequenz am Ausgang zu bedienen.

Der vorliegenden Erfindung lag die Aufgabe zugrunde, ein Verfahren der eingangs genannten Art anzugeben, welches in der Lage ist, mit wenig Aufwand digitale Kanalbündel- bzw. Kanalsignale aus einem FDM-Signal hoher Kanalzahl zu separieren und umzusetzen.

Die Lösung dieser Aufgabe erfolgt mit den Mitteln des Anspruches 1. Vorteilhafte Ausgestaltungen ergeben sich durch die Unteransprüche.

Das erfindungsgemäße Verfahren gestattet mit wenig Aufwand einzelne Kanalbündel- bzw. Kanalsignale aus einem z.B. nach dem Verfahren des Hauptpatents erzeugten FDM-Signal zu separieren und Frequenzumzusetzen.

Ausführungsbeispiele für ein einzelnes Einzelkanalbandfilter bzw. für Parallelschaltungen von mehreren Einzelkanalbandfiltern lassen sich vorteilhafterweise in digitalen Frequenzmultiplexumsetzern, in Drop-An-Add-Demultiplexern bzw. -Multiplexern einsetzen.

Es folgt nun die Beschreibung anhand der Figuren.

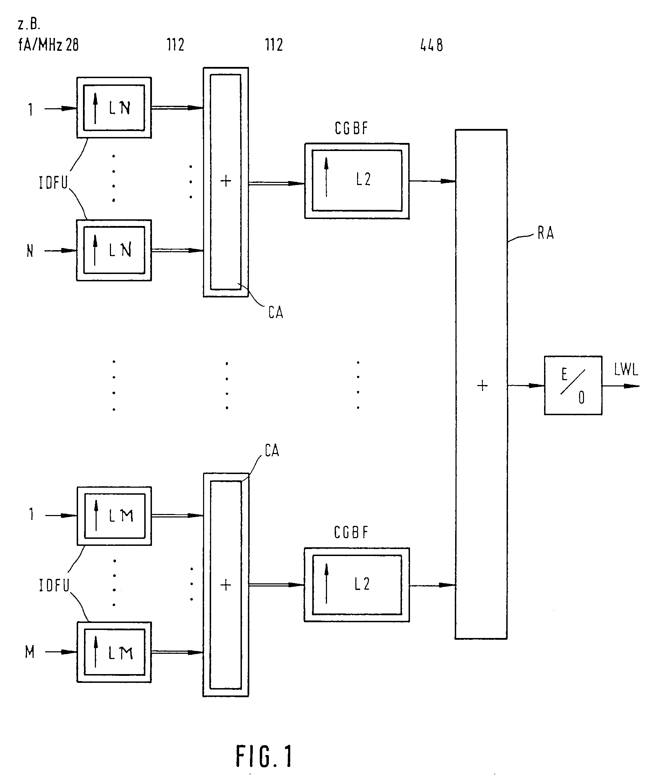

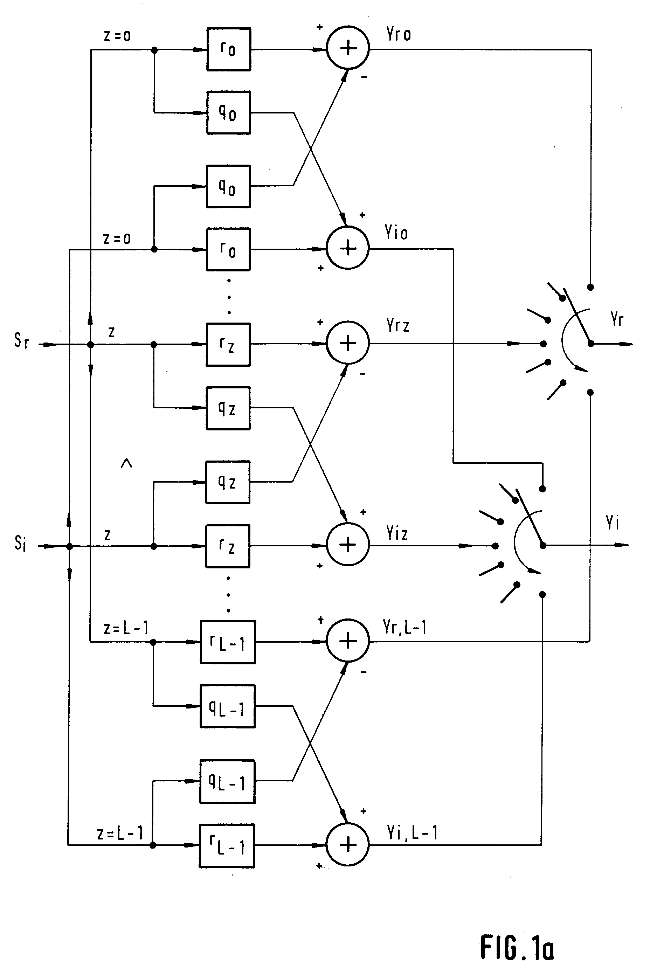

Die Figur 1 zeigt als Ausführungsbeispiel das Blockschaltdiagramm eines digitalen Frequenzmultiplexumsetzers, und in Figur 1a ist ein detaillierteres Blockschaltbild für die Ausführung einiger Filter als Polyphasenfilternetzwerk wiedergegeben.

In Figur 1 ist erkennbar, wie eine erste Gruppe von 1 bis N Kanälen, beispielsweise TV-Kanälen, jeweils mittels eines interpolierenden digitalen Frequenzumsetzers IDFU unter Erhöhung der Abtastrate beispielhaft von 28 MHz auf 112 MHz, also um den Faktor LN = 4, umgesetzt werden, um anschließend mittels eines komplexen Addierers CA zusammengefaßt zu werden. Dieses zusammengefaßte Signal wird anschließend einem komplexen Gruppenbandfilter CGBF zugeführt, welches unter Erhöhung der Abtastrate auf beispielsweise 448 MHz, also um den Faktor L2 = 4, filtert. In einem unteren gezeichneten Zweig passiert das oben Geschilderte für eine andere Gruppe von M-Kanälen, beispielsweise mit anderen Bandbreiten wie die 1. Gruppe von N-Kanälen, z.B. Stereotonkanälen, die deshalb eine andere Abtastratenerhöhung LM erfahren können, um auf die einheitliche Abtastrate von hier 112 MHz am Eingang der komplexen Gruppenbandfilter zu kommen.

Die Ausgangssignale der einzelnen komplexen Gruppenbandfilter CGBF werden mittels eines reellen Addierers RA zu dem FDM-Signal zusammengefaßt, welches nach einer elektrooptischen Wandlung E/O über einen Lichtwellenleiter LWL übertragen wird.

Die Figur 1a zeigt die Realisierung eines Polyphasenfilternetzwerkes für komplexe Eigangs- und Ausgangssignale mit allgemeiner Zweigfilterstruktur, welche den Vorteil hat, daß die arithmetischen Operationen bei der niedrigen Abtastrate erfolgen und daß lediglich eine Minimalzahl von Multiplexern benötigt wird.

Bei einer Kombination der Fig. 1 mit Fig. 1a sind für jeden IDFU ein Paar von Zeit-Multiplexern (zur zeitlichen Verschachtelung) nötig, und die Operation komplexes Addieren CA muß bei der erhöhten Abtastrate 112 MHz durchgeführt werden. Entsprechend ist auch für jedes Gruppenbandfilter ein Zeitmultiplexer erforderlich, und die Operation Addieren RA wird bei der zusätzlich um L2 erhöhten Abtastrate 448 MHz durchgeführt.

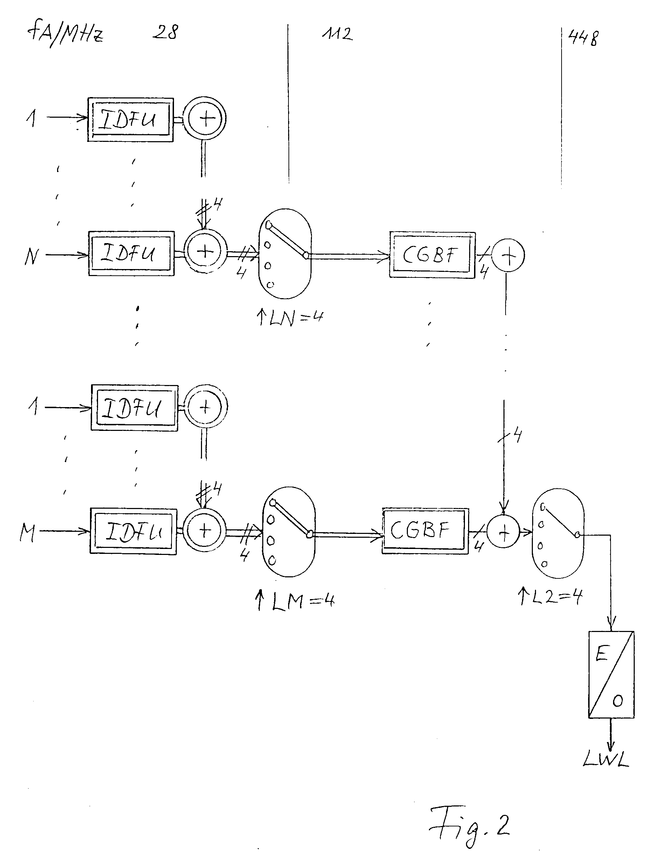

Die Fig. 2 schafft Abhilfe. Hier ist im Unterschied zu Fig. 1 die Operation Addition CA über den zugehörigen Multiplexer zu der jeweils tieferen, also noch nicht erhöhten Abtastfrequenz heruntergezogen worden. Dies gilt für alle zu einer Gruppe N bzw. M gehörenden IDFUs. Die komplexe Addition wurde in eine Anzahl N bzw. M (N-1, M-1) Zweier-Addierer aufgeteilt für jede der hier 8 (4x2) Einzelleitungen.
Die gleichen Maßnahmen wurden auch in der zweiten Stufe bei den Gruppen-Bandfiltern CGBF angewendet. Die Erhöhung der Abtastrate um L2=4 erfolgt hier ebenfalls erst nach der Addition.

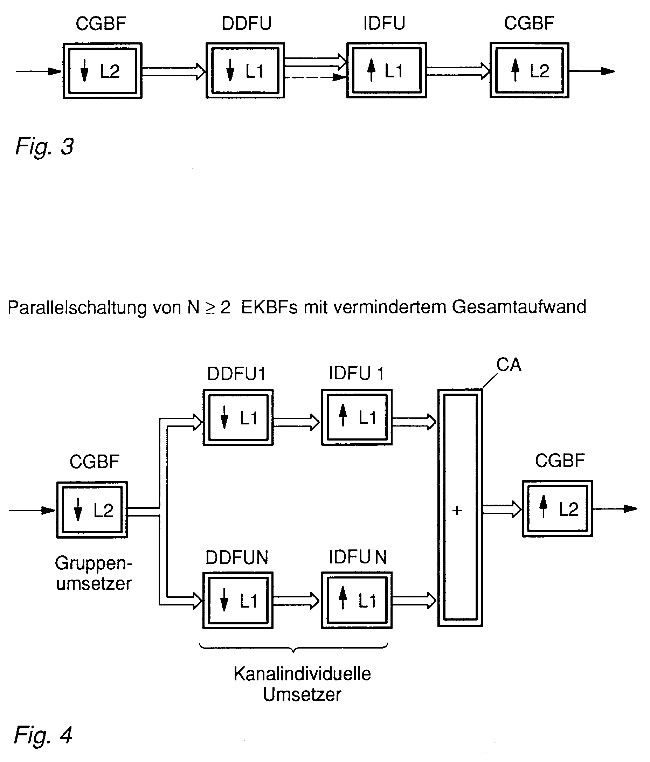

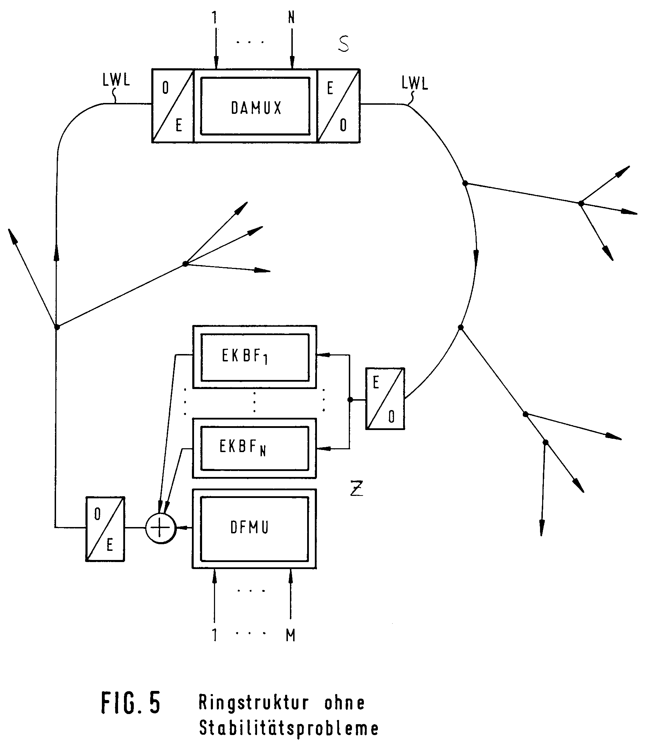

Die Figuren 3 und 4 zeigen Ausführungsbeispiele für ein Einzelkanalbandfilter bzw. für die Parallelschaltung mehrerer Einzelkanalbandfilter, wie sie beispielsweise bei Umsetzern in einem Verteilnetz gemäß Figur 5 eingesetzt werden können.

Die Figur 3 zeigt den Aufbau eines Einzelkanalbandfilters, das sich beispielsweise aus dem Blockschaltbild gemäß Figur 1 für N = 1 und M = 0 ergibt. Für diesen Sonderfall entfallen die komplexen Addierer CA der Figur 1, so daß sich daraus der rechte Teil der Figur 3 in Form der Kaskade des interpolierenden digitalen Frequenzumsetzers IDFU und des komplexen Gruppenbandfilters CGBF ergibt. Diese Kaskade wird gespeist aus einer Kaskade aus einem komplexen Gruppenbandfilter CGBF mit einem dezimierenden digitalen Frequenzumsetzer DDFU, welche Blöcke zu den interpolierenden rechten Blöcken transponiert sind. Die Übergabe von der linken Kaskade in die rechte Kaskade kann mittels komplexem aber auch reellem Signal erfolgen.

Die Figur 4 zeigt eine Parallelschaltung von mehreren Einzelkanalbandfiltern EKBF mit vermindertem Gesamtaufwand. Die rechte Hälfte (Trennlinie mitten durch die kanalindividuellen Umsetzer) zeigt den oberen Eingangsteil der Baumstruktur nach Figur 1. Die linke Hälfte ist die transponierte Struktur der rechten Hälfte, d.h. die rechte Struktur wird mittels Hermite'scher Transposition umgewandelt, aufgrund der aus einem interpolierenden Block ein entsprechender dezimierender Block und aus einem komplexen Addierer ein komplexer Verteiler wird.

Die Figur 5 zeigt ein Ringverteilnetz, wobei im Ring und in den Abzweigungen das FDM-Signal über einen Lichtwellenleiter LWL übertragen wird. Bei der unteren zentralen Station fällt die größte Anzahl von einzuspeisenden Programmen an, wobei die Einspeisung vorteilhafterweise über einen digitalen Frequenzmultiplexumsetzer DFMU erfolgt, welcher M-Kanäle umsetzt und in den Ring einspeist, selbst aber nicht Teil der Ringstruktur ist. Der Ring wird geschlossen über einen DAMUX der Station S () für N einzuspeisende Kanäle und über N Einzelkanalbandfilter EKBF1 bis EKBFN bei der zentralen Station Z, welche jeweils nur für die einzelnen Kanäle um die Frequenzen F1 bis FN transparent sind und ihre Ausgangssignale über ein Summierglied, in das auch die M-Kanäle eingespeist werden, das FDM-Signal der linken Ringhälfte ergeben. In den Frequenzbereichen F1 bis FN sperrt der DAMUX der Station S. Die Einzelkanalbandfilter der Zentralen Z können vorteilhafterweise die Struktur der Figur 3 bzw. die Parallelschaltungen der Figur 4 annehmen.

## Patentansprüche

1. Verfahren zur Erzeugung eines FDM-Signals hoher Kanalzahl für Übertragungszwecke in Rundfunk- und Fernseh-Verteilsystemen, wobei die mit einer einheitlichen Abtastrate abgetasteten und digitalisierten Kanal- bzw. Kanalbündel-Signale jeweils in interpolierenden digitalen Frequenzumsetzern unter Erhöhung der Abtastrate um einen Faktor LN, LM ≧ 2 frequenzumgesetzt und mittels eines Addierers zusammengefaßt werden und wobei mehrere solchermaßen frequenzumgesetzten und zusammengefaßten Signale zu dem FDM-Signal zusammengefaßt werden, wobei die frequenzumgesetzten Signale komplexwertige Signale sind, welche mittels eines komplexen Addierers (CA) zusammengefaßt und in einer zweiten Stufe mittels Filter mit komplexwertigen Koeffizienten (CGBF) unter weiterer Erhöhung der Abtastrate um einen Faktor L2 ≧ 2 frequenzumgesetzt und in reelle Signale umgewandelt werden, welche mittels eines reellen Addierers (RA) zu dem FDM-Signal zusammengefaßt werden (Fig. 1), dadurch gekennzeichnet, daß zur Separierung der einzelnen Kanal- bzw. Kanalbündelsignale aus dem FDM-Signal die zur Aufbereitung desselben angewendeten Verfahrensschritte einer Hermite'schen Transposition unterzogen und angewendet werden.

2. Verfahren nach Anspruch 1, dadurch gekennzeichnet, daß die Faktoren LN, LM bzw. L2 Werte von natürlichen Zahlen annehmen.

3. Verfahren nach Anspruch 2, dadurch gekennzeichnet, daß die Faktoren LN, LM bzw. L2 Werte von Zweierpotenzen annehmen.

4. Verfahren nach einem der vorhergehenden Ansprüche, dadurch gekennzeichnet, daß das Ausgangsfilter des interpolierenden digitalen Frequenzumsetzers (IDFU) ein komplexwertiges Polyphasenfilternetzwerk (PPF) ist mit komplexem Ein- und Ausgangssignal, wobei das komplexe Eingangssignal gefaltet wird mit der komplexen Impulsantwort zum komplexen Ausgangssignal und wobei LM = L bzw. LN = L Zweige vorhanden sind, in denen jeweils die Faltungsprodukte von Realteil und Imaginärteil des Eingangssignals mit den komplexen Zweigimpulsantworten des betreffenden Zweiges zusammengefasst werden und wobei anschließend alle L Realteile und alle L Imaginärteile synchron gemultiplext d.h. zeitlich verschachtelt werden zur Bildung des Ausgangssignals mit der um L erhöhten Abtastfrequenz (Fig. 1a).

5. Verfahren nach einem der vorhergehenden Ansprüche, dadurch gekennzeichnet, daß das FDM-Signal nach elektrooptischer Umwandlung über ein Glasfasernetz übertragen wird.

6. Verfahren nach einem der vorhergehenden Ansprüche, dadurch gekennzeichnet, daß die Abtastratenerhöhung nach der Addition erfolgt (Fig. 2).

7. Verfahren nach einem der vorhergehenden Ansprüche, gekennzeichnet durch die Anwendung in einem DAMUX, DFMU oder DFU für ein EKBF zur Einzelkanalumsetzung eines Kanals aus einem ankommenden FDM-Signal in eine Kanallage eines abgehenden FDM-Signals (Fig. 5 + Fig. 3).
